# FASCICULE DE BREVET EUROPEEN

(11) **EP 2 723 628 B1**
(45) Date de publication et mention de la délivrance du brevet: **26.10.2016**
(21) Numéro de dépôt: 12728587.2
(22) Date de dépôt: 20.06.2012
(51) Int. Cl.: B62D 25/14

(54) **TRAVERSE DE PLANCHE DE BORD DE VEHICULES AYANT DIFFERENTES CONFIGURATIONS**
INSTRUMENTENTAFELQUERTRÄGER FÜR FAHRZEUGE MIT VERSCHIEDENEN KONFIGURATIONEN
INSTRUMENT PANEL CROSSMEMBER FOR VEHICLES THAT HAVE DIFFERENT CONFIGURATIONS

(30) Priorité: 21.06.2011 FR 1155459
(43) Date de publication de la demande: 30.04.2014
(73) Titulaire: Faurecia Intérieur Industrie, 92000 Nanterre (FR)
(72) Inventeur: DA COSTA PITO, Sergio, F-95800 Cergy (FR); BRANCHERIAU, Christian, F-95220 Herblay (FR); BAUDART, Laurent, F-60530 Fresnoy en Thelle (FR); DESCAMPS, Albin, F-60240 Montjavoult (FR)
(74) Mandataire: Lavoix
(86) Numéro de dépôt international: PCT/EP2012/061895
(87) Numéro de publication internationale: WO 2012/175578

(56) Documents cités:
- WO-A1-2008/087262
- WO-A1-2009/077702
- FR-A1- 2 891 799

## Description

La présente invention concerne une traverse de planche de bord de véhicules ayant différentes configurations, ladite traverse étant destinée à s'étendre entre deux pieds avant d'un véhicule.

L'invention concerne également une gamme de véhicules.

Chaque véhicule de la gamme possède une structure de caisse qui lui est propre, adaptée à la carrosserie du véhicule, à son mode de propulsion et/ou aux équipements supportés par ladite caisse.

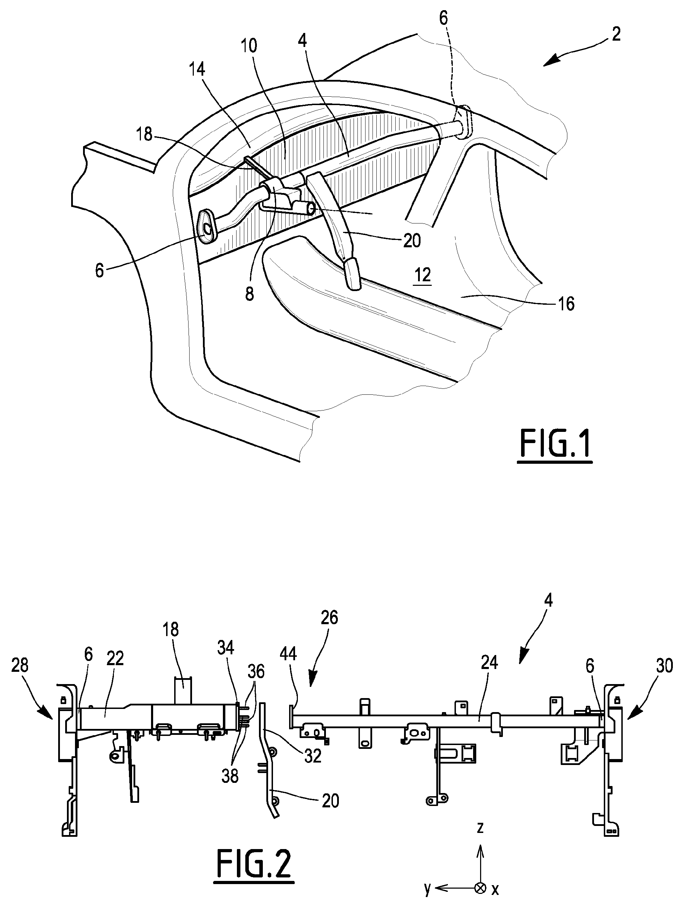

La Figure 1 représente, vue de l'intérieur du véhicule, une caisse de véhicule 2 automobile de l'art antérieur selon une première configuration.

Selon cette première configuration, la caisse 2 comprend une traverse de planche de bord 4 s'étendant transversalement dans le véhicule et, dont les extrémités sont fixées respectivement sur les pieds avant droit et gauche de la caisse, par l'intermédiaire d'un support 6.

Classiquement, la traverse 4 est formée par un élément tubulaire creux.

La traverse 4 est conçue pour supporter différents équipements du véhicule, comme la planche de bord, non représentée, du véhicule. Elle peut aussi servir d'appui à un support de colonne de direction 8 du véhicule.

A cet effet, la traverse 4 comprend différentes pattes de support, non représentées, destinées à supporter différents équipements du véhicule.

Comme représenté à la Figure 1, la caisse 2 comprend un tablier supérieur 10 séparant le compartiment moteur du véhicule et l'habitacle 12 de ce véhicule et une traverse inférieure de baie 14 située en dessous du pare-brise de ce véhicule, ledit tablier supérieur 10 et ladite traverse inférieure de baie 14 étant situées sensiblement au niveau de la traverse de planche de bord 4. Un plancher 16 délimite la partie inférieure de l'habitacle 12.

Une patte de liaison 18, s'étendant sensiblement selon la direction longitudinale X du véhicule, relie la traverse inférieure de baie 14 et la traverse de planche de bord 4.

La caisse de véhicule réalisée selon cette première configuration comprend également une jambe de force 20 reliant le corps principal de ladite traverse 4 et le plancher 16, pour reprendre une partie des efforts supportés par la traverse 4 et les transmettre à la structure du véhicule via le plancher 16. La jambe de force 20 se situe à proximité du support de colonne de direction 8.

Il existe des caisses de véhicule réalisées selon une seconde configuration. Ces caisses de véhicules ne comprennent qu'une demi-traverse de planche de bord, c'est-à-dire un seul tronçon de traverse disposé en vis-à-vis du siège conducteur et adapté pour recevoir le support de colonne de direction. Dans cette seconde configuration, l'une des extrémités du tronçon est fixée au pied avant gauche, l'autre extrémité supporte l'extrémité supérieure de la jambe de force. Ainsi, dans cette configuration, les efforts supportés par la traverse sont transmis au pied avant gauche et au plancher.

In existe également des caisses de véhicule réalisées selon une troisième configuration. Ces caisses de véhicules ne comprennent pas de jambe force, les efforts supportés par la traverse s'étendant transversalement dans le véhicule étant alors uniquement transmis à la structure du véhicule via les pieds avant droit et gauche.

Les différentes configurations décrites ci-dessus peuvent être développées chacune pour un type de véhicule différent, par exemple pour une berline, un coupé, un coupé/cabriolet... ou pour des véhicules possédant des modes de propulsion différents, tel qu'un moteur à combustion interne, un moteur électrique ou un mode de propulsion hybride.

De même, ces différentes configurations peuvent être utilisées pour des véhicules possédant des équipements différents ou pour des véhicules destinés à être vendus dans des zones géographiques différentes. En effet, d'un pays à l'autre les normes de sécurité varient, ce qui nécessite parfois un aménagement de la caisse du véhicule.

Toutefois, le développement de chaque nouvelle caisse de véhicule coûte cher. En effet, il faut à chaque fois réaliser une étude sur la conception de la caisse et, notamment, sur sa traverse de planche de bord et sur son éventuelle jambe de force. De plus, chaque nouveau développement de pièces nécessite un outillage spécifique coûteux.

Le document WO-2009/077702 décrit une traverse modulaire conforme au préambule de la revendication 1.

L'un des buts de l'invention est de pallier les inconvénients mentionnés ci-dessus en proposant une gamme de véhicules, peu coûteuse, permettant de réduire le temps de développement de chaque véhicule appartenant à ladite gamme et les frais d'outillage L'invention est indiquée dans la revendication 1.

A cet effet, l'invention a pour objet une traverse de planche de bord du type susmentionnée, dans laquelle
- la traverse comprend un premier tronçon s'étendant en vis-à-vis du siège du conducteur du véhicule, une extrémité dudit premier tronçon étant destinée à être connectée à un pied avant du véhicule, l'autre extrémité étant connectée à un dispositif de fixation ; et en ce que
- ledit dispositif de fixation est adapté pour supporter de façon sélective une extrémité d'un second tronçon s'étendant en vis-à-vis du siège du passager du véhicule et/ou une jambe de force adaptée pour connecter ladite traverse au plancher du véhicule selon la configuration du véhicule.

La traverse selon l'invention peut comporter une ou plusieurs des caractéristiques suivantes :
- l'une des extrémités du second tronçon peut être destinée à être fixée à un pied avant du véhicule ;
- le dispositif de fixation peut comprendre une première platine s'étendant sensiblement perpendiculairement à la direction transversale du véhicule et fixée à l'extrémité du premier tronçon opposée au pied avant ;
- le dispositif de fixation peut comprendre une seconde platine s'étendant sensiblement perpendiculairement à la direction transversale du véhicule et fixée à l'extrémité du second tronçon disposée en vis-à-vis du premier tronçon ;
- la première platine peut comprendre des moyens de fixations et des moyens de centrage destinés à coopérer avec des orifices de réception appartenant à la seconde platine et/ou à l'extrémité supérieure de la jambe de force ;
- les moyens de fixations peuvent être formés par au moins un axe fileté destiné à coopérer avec un écrou ;
- l'un au moins des premier et second tronçons et de la jambe de forme peut être réalisé en magnésium, ou en aluminium, ou en matériaux composites.

L'invention concerne également une gamme de véhicules caractérisée en ce que chacun des véhicules de la gamme comporte une traverse de planche de bord selon l'invention présentant le même premier tronçon.

Selon un premier mode de réalisation, au moins un véhicule de la gamme peut comporter uniquement un premier tronçon et un second tronçon.

Selon un second mode de réalisation, au moins un véhicule de la gamme peut comporter uniquement un premier tronçon et une jambe de force.

L'invention sera mieux comprise à la lecture de la description qui va suivre, donnée uniquement à titre d'exemple et faite en se référant aux dessins annexés sur lesquels :
- la Figure 1 représente une vue en perspective et partielle d'une caisse de véhicule appartenant à l'art antérieur et comprenant une traverse de planche de bord et une jambe de force ;
- la Figure 2 représente une vue de face et partielle d'une première structure de véhicule, ladite structure comprenant une traverse de planche de bord composée de deux demi-tronçons et une jambe de force assemblés entre eux à l'aide d'un dispositif de fixation ;
- la Figure 3 représente une vue de face d'une première platine appartenant au dispositif de fixation ;
- la Figure 4 représente une vue de face de l'extrémité supérieure de la jambe de force ;
- la Figure 5 représente une vue de face d'une seconde platine appartenant au dispositif de fixation ;
- la Figure 6 représente une vue de face et partielle d'une seconde structure de véhicule ; et
- la Figure 7 représente une vue de face et partielle d'une troisième structure de véhicule.

Les références utilisées lors de la description de l'art antérieur représenté à la Figure 1 et désignant les mêmes pièces seront reprises dans la description qui va suivre.

Dans la suite de la description, les termes « avant », « arrière », « droit », « gauche », « supérieur», « inférieur», « longitudinal », « transversal », et « vertical » s'entendent par référence au système d'axes orthogonal usuel des véhicules automobiles représenté sur les Figures et possédant :
- un axe longitudinal X dirigé de l'arrière vers l'avant,
- un axe transversal Y dirigé de la droite vers la gauche, et
- un axe vertical Z dirigé du bas vers le haut.

L'invention vise à protéger une gamme de véhicules possédant des configurations de structures de caisse différentes, lesdites structures possédant comme cela sera détaillé ultérieurement certaines pièces en commun.

L'invention vise plus particulièrement à protéger une gamme de véhicules possédant trois configurations de structures de caisse différentes, lesdites structures comportant un premier tronçon 22 de traverse de planche de bord s'étendant sensiblement en vis-à-vis du siège conducteur du véhicule, et un second tronçon 24 de traverse de planche de bord disposé en vis-à-vis du siège passager du véhicule et/ou une jambe de force 20.

Ainsi, dans toutes les configurations, les structures de caisse comprennent le premier tronçon 22 de traverse de planche de bord s'étendant transversalement et disposé vis-à-vis du siège conducteur du véhicule.

Le premier tronçon 22 comporte une interface adaptée pour recevoir le support de colonne de direction 8 et permettre la fixation d'une des extrémités de la patte de liaison 18, reliant la traverse inférieure de baie 14 et la traverse de planche de bord 4.

Le second tronçon 24 peut notamment être adapté pour supporter un équipement de sécurité contenant un coussin gonflable destiné à protéger le passager du véhicule en cas de choc.

De plus, selon l'invention, le premier tronçon 22, et le second tronçon 24 et/ou la jambe de force 20 sont fixés entre eux à l'aide d'un dispositif de fixation 26.

Nous allons à partir de ce point décrire plus particulièrement la première configuration de structure de caisse représentée aux Figures 2 à 5.

La première configuration de structure de caisse comprend le premier tronçon 22 de traverse de planche de bord dont l'une des extrémités est fixée au pied avant gauche 28 du véhicule par l'intermédiaire d'un support 6, le second tronçon 24 de traverse de planche de bord dont l'une des extrémités est fixée au pied avant droit 30 du véhicule par l'intermédiaire d'un support 6 et la jambe de force 20.

Le second tronçon 24 est disposé dans le prolongement du premier tronçon 22, de manière à ce que leurs axes soient parallèles. De préférence et comme représenté à la Figure 2, le premier tronçon 22 et le second tronçon 24 s'étendent coaxialement.

Comme mentionné ci-dessus, le premier tronçon 22, le second tronçon 24 et l'extrémité supérieure 32 de la jambe de force 20 sont fixés entre eux à l'aide du dispositif de fixation 26.

Le dispositif de fixation 26 comprend des moyens de fixation 36, par exemple des axes filetés pouvant être sertis ou soudés, dans l'exemple représenté au nombre de trois et disposés de manière à former chacun les sommets d'un triangle. Ces moyens de fixation 36 s'étendent sensiblement transversalement selon la direction transversale Y en saillie du premier tronçon 22.

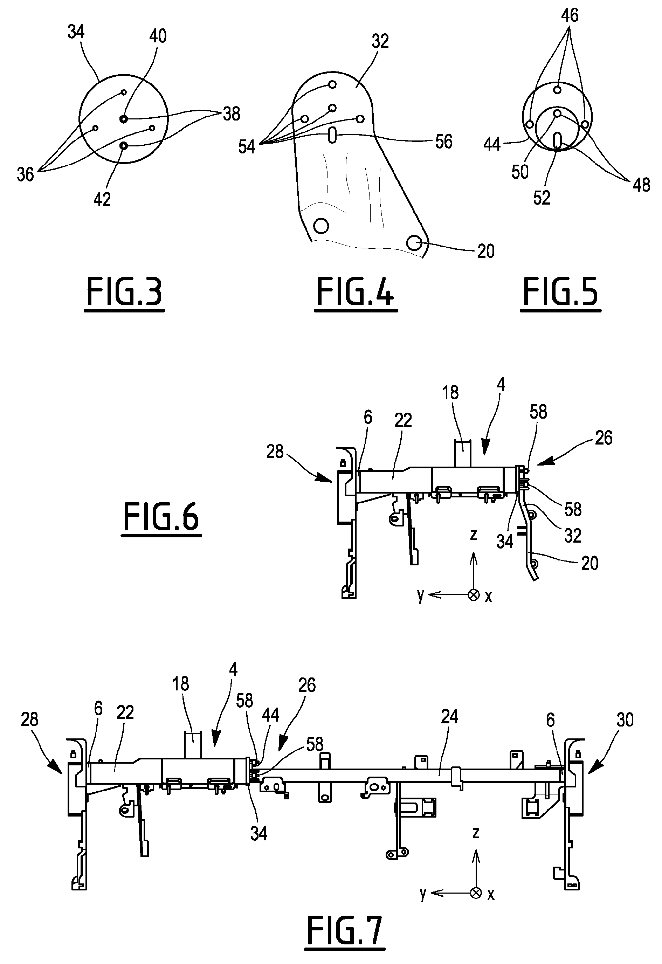

Le dispositif de fixation 26 comprend une première platine 34 représentée à la Figure 3, de forme sensiblement arrondie, s'étendant sensiblement perpendiculairement à la direction transversale Y du véhicule et fixée à l'extrémité du premier tronçon 22 opposée au pied avant gauche 28. Selon le mode de réalisation représenté sur les figures, les moyens de fixation 36 sont formés sur la première platine 34 et s'étendent en saillie de celle-ci selon la direction transversale Y.

Selon un mode de réalisation, les moyens de fixation 36 comportent également des moyens de centrage 38, tels que des tiges sertis ou soudés, dans l'exemple représenté au nombre de deux, s'étendant selon des axes s'étendant sensiblement selon la direction transversale Y en saillie du premier tronçon 22. Selon le mode de réalisation représenté sur les figures, les moyens de centrage 38 sont formés sur la première platine, l'une 40 desdites tiges étant disposés au centre de la platine 34 et l'autre 42 à proximité du pourtour de la partie inférieure de la platine.

Les axes des moyens de centrage 38 sont donc sensiblement parallèles aux axes formant les moyens de fixation 36.

Le dispositif de fixation comprend également des orifices de réception 46, 54 des moyens de fixation 36 et des orifices de réception 48 des moyens de centrage 38, ces orifices appartenant au second tronçon 24 et /ou à l'extrémité supérieure 32 de la jambe de force. Les orifices de réception 46, 54 des moyens de fixation 36 et les orifices de réception 48 des moyens de centrage 38 sont d'axes sensiblement transversaux parallèles les uns par rapport aux autres.

Plus particulièrement, le dispositif de fixation comprend une seconde platine 44 représentée à la Figure 5, de forme sensiblement arrondie, s'étendant sensiblement perpendiculairement à la direction transversale Y du véhicule et fixée à l'extrémité du second tronçon 24 opposée au pied avant droit 30. Ladite seconde platine 44 possède un diamètre inférieur à celui de la première platine 34.

Ladite seconde platine 44 porte les orifices de réception 46 des moyens de fixations 36, dans l'exemple représenté au nombre de trois et formant chacun les sommets d'un triangle.

Ladite seconde platine 44 comporte également les orifices de réception 48 des moyens de centrage 38. Dans l'exemple, deux orifices sont prévus, l'un 50 de forme ronde, destiné à accueillir la tige centrale 40 et l'autre 52 de forme oblongue destiné à accueillir la tige 42.

En position assemblée, l'extrémité supérieure 32 de la jambe de force 20 s'étend entre la première 34 et la seconde platine 44. Comme représenté à la Figure 4, ladite extrémité 32 porte les orifices de réception 54 des moyens de fixations 36 et des moyens de centrage 38 destinés à être disposé en vis-à-vis des orifices 46 et 48 de la seconde platine 44.

Ainsi, tout comme la seconde platine 44, l'extrémité supérieure 32 de la jambe de force 20 est également munie d'un orifice 56 de forme oblongue destiné à accueillir la tige 42.

Dans l'exemple représenté, afin d'assurer la fixation des première et seconde platines 34 et 44 et de la jambe de force 20, des écrous 58 viennent se fixer sur les axes filetés traversant la jambe de force 20 et la seconde platine 44.

Selon la disposition des orifices de réception 54 sur l'extrémité supérieure 32 de la jambe de force 20, la jambe de force 20 peut être disposée de façon à s'étendre sensiblement selon la direction verticale Z du véhicule ou à être inclinée par rapport à cette direction verticale Z.

Selon un autre mode de réalisation, les moyens de fixation 36 et les moyens de centrage 38 s'étendent en saillie du deuxième tronçon 24 et les orifices de réception de ces moyens de fixation et de centrage sont prévus sur le premier tronçon 22. Il suffit par exemple pour cela d'inverser la position de la première platine 34 et celle de la deuxième platine 44.

Selon encore un autre mode de réalisation, le premier tronçon 22 comprend l'un des moyens de fixation 36 et des moyens de centrage 38 et le deuxième tronçon 24 comprend l'autre des moyens de fixation 36 et des moyens de centrage 38, les orifices de réception de ces moyens étant répartis de façon adéquate entre le premier et le deuxième tronçons.

Les moyens de fixation 36 et de centrage 38 sont donc disposés dans le prolongement du premier tronçon 22 et/ou du deuxième tronçon 34 et leur axe est sensiblement parallèle aux axes de ces premier et deuxième tronçons.

Cet agencement permet de faciliter l'assemblage du deuxième tronçon 24 et/ou de la jambe de force 20 sur le premier tronçon 22 par l'intermédiaire du dispositif de fixation 26.

En outre, le dispositif de fixation 26 est peu encombrant dans la mesure ou les moyens de fixation 36 et les moyens de centrage 38 sont inscrits dans le contour du premier tronçon 22 et/ou du deuxième tronçon 24, c'est-à-dire qu'ils n'augmentent pas le volume externe de la structure de caisse.

Nous allons à partir de ce point décrire plus particulièrement la seconde configuration de structure de caisse représentée à la Figure 6.

Cette seconde configuration de structure de caisse comprend le premier tronçon 22 dont l'une des extrémités est fixée au pied avant gauche 28 du véhicule et la jambe de force 20, l'extrémité du premier tronçon 22 opposée au pied avant gauche 28 supportant l'extrémité supérieure 32 de la jambe de force 20. Ainsi, cette seconde configuration de structure de caisse est dépourvue du second tronçon 24 s'étendant en vis-à-vis du siège passager du véhicule.

La fixation de la jambe de force 20 sur le premier tronçon 22 est assurée à l'aide du dispositif de fixation 26.

A cet effet, le premier tronçon 22 comprend la première platine 34 précédemment décrite et l'extrémité supérieure 32 de la jambe de force 20 comprend les orifices de réception 54 des moyens de fixations 36 et des moyens de centrage 38, décrits précédemment. La fixation de la première platine 34 et de l'extrémité supérieure 32 de la jambe de force 20 est assurée par des écrous 58 venant se fixer sur les axes filetés traversant ladite extrémité supérieure 32.

Nous allons à partir de ce point décrire plus particulièrement la troisième configuration de structure de caisse représentée à la Figure 7.

Cette troisième configuration de structure de caisse comprend le premier tronçon 22 dont l'une des extrémités est fixée au pied avant gauche 28 du véhicule et le second tronçon 24 dont l'une des extrémités est fixée au pied avant droit 30 du véhicule. Ainsi, cette troisième configuration de structure de caisse est dépourvue de jambe de force.

La fixation du premier tronçon 22 sur le second tronçon 24 est assurée à l'aide du dispositif de fixation 26.

A cet effet, le dispositif de fixation 26 comprend les première et seconde platines 34 et 44 précédemment décrites, fixées respectivement aux extrémités du premier et du second tronçon 22 et 24. La fixation des première et seconde platines entre elles est assurée par des écrous 58 venant se fixer sur les axes filetés traversant la seconde platine 44.

Ainsi, le second tronçon 24 est commun aux première et troisième configurations de structure de caisse et la jambe de force 20 est commune aux première et seconde configurations de structure de caisse. Le second tronçon 24 et la jambe de force 20 sont ainsi disposés de manière sélective sur le dispositif de fixation 26 selon la configuration de structure de caisse à laquelle ils appartiennent.

Le premier tronçon est quant à lui commun aux première, seconde et troisième configurations de structure de caisse.

De préférence, les premier et second tronçons 22 et 24 sont obtenus à partir d'éléments tubulaires creux.

De préférence, la jambe de forme 20 est obtenue à partir d'une tôle pliée.

De préférence, les premier et second tronçons 22 et 24 et la jambe de forme 20 sont réalisés en magnésium, en aluminium, en acier, en matériaux composites ou selon une solution hybride par exemple, acier/magnésium ou acier/matériaux composites.

Une telle gamme de véhicules permet de réduire notablement les coûts de développement des véhicules de cette gamme en évitant un développement complet de la traverse de planche de bord pour chaque nouvelle configuration de véhicule. Les coûts d'outillage sont également réduits.

De plus, les caisses de véhicule de ladite gamme présentent une masse optimisée.

Avantageusement, une même configuration de caisse peut être choisie pour des véhicules différents, seuls les matériaux et l'épaisseur des éléments de la traverse étant adaptés pour le second tronçon et/ou la jambe de force.

Les véhicules décrits ci-dessus sont plus particulièrement adaptés pour la conduite à droite. Bien évidement, l'invention vise également à protéger les véhicules adaptés pour la conduite à gauche.

## Revendications

1. Traverse de planche de bord de véhicules ayant différentes configurations, ladite traverse (4) étant destinée à s'étendre entre deux pieds avant (28, 30) d'un véhicule, la traverse (4) comprenant un premier tronçon (22) s'étendant en vis-à-vis du siège du conducteur du véhicule, une extrémité dudit premier tronçon (22) étant destinée à être connectée à un pied avant (28) du véhicule, l'autre extrémité étant connectée à un dispositif de fixation (26), ledit dispositif de fixation (26) étant adapté pour supporter de façon sélective une extrémité d'un second tronçon (24) s'étendant en vis-à-vis du siège du passager du véhicule et/ou une jambe de force (20) adaptée pour connecter ladite traverse (4) au plancher (16) du véhicule selon la configuration du véhicule, le second tronçon (24) comprenant des orifices de réception, la jambe de force comprenant des orifices de réception, **caractérisé en ce que** le dispositif de fixation comprend des moyens de fixations (36) et/ou des moyens de centrage (38) destinés à coopérer avec les orifices de réception (46, 48) appartenant au second tronçon et avec les orifices de réception appartenant à l'extrémité supérieure (32) de la jambe de force dans une première configuration du véhicule, avec les orifices de réception appartenant à l'extrémité supérieur de la jambe de force dans une seconde configuration du véhicule et avec les orifices de réception appartenant au second tronçon dans une troisième configuration du véhicule.

2. Traverse selon la revendication 1, **caractérisée en ce que** l'une des extrémités du second tronçon (24) est destinée à être fixée à un pied avant (30) du véhicule.

3. Traverse selon la revendication 1 ou 2, **caractérisée en ce que** le dispositif de fixation (26) comprend une première platine (34) s'étendant sensiblement perpendiculairement à la direction transversale (Y) du véhicule et fixée à l'extrémité du premier tronçon (22) opposée au pied avant (28).

4. Traverse selon la revendication 3, **caractérisée en ce que** le dispositif de fixation (26) comprend une seconde platine (44) s'étendant sensiblement perpendiculairement à la direction transversale (Y) du véhicule et fixée à l'extrémité du second tronçon (22) disposée en vis-à-vis du premier tronçon (22).

5. Traverse selon les revendications 3 et 4, **caractérisée en ce que** la première platine (34) comprend les moyens de fixation (36) et/ou les moyens de centrage (38), la seconde platine (44) comprenant les orifices de réception desdits moyens.

6. Traverse selon la revendication 5, **caractérisée en ce que** les moyens de fixations (36) sont formés par au moins un axe fileté destiné à coopérer avec un écrou (58).

7. Traverse selon la revendication 6, **caractérisé en ce que** l'axe des moyens de fixation (36) est sensiblement parallèle à l'axe du premier tronçon (22) et/ou du deuxième tronçon (34).

8. Traverse selon l'une quelconque des revendications 1 à 7, **caractérisée en ce que** l'un au moins des premier et second tronçons (22, 24) et de la jambe de forme (20) est réalisé en magnésium, ou en aluminium, ou en matériaux composites.

9. Gamme de véhicules, **caractérisée en ce que** chacun des véhicules de la gamme comporte une traverse de planche de bord selon l'une quelconque des revendications 1 à 8 présentant le même premier tronçon (22).

10. Gamme de véhicules selon la revendication 9, dans laquelle au moins un véhicule comporte uniquement un premier tronçon (22) et un second tronçon (24).

11. Gamme de véhicules selon la revendication 9, dans laquelle au moins un véhicule comporte uniquement un premier tronçon (22) et une jambe de force (20).

## Patentansprüche

1. Instrumententafelquerträger für Fahrzeuge mit verschiedenen Konfigurationen, wobei der Querträger (4) so gewählt ist, dass er sich zwischen zwei Vorderfüßen (28, 30) eines Fahrzeugs erstreckt, wobei der Querträger (4) einen ersten Abschnitt (22) umfasst, der sich gegenüber des Fahrersitzes des Fahrzeugs erstreckt, wobei ein Ende des ersten Abschnitts (22) so gewählt ist, dass es mit einem Vorderfuß (28) des Fahrzeugs verbunden ist, wobei das andere Ende mit einer Befestigungsvorrichtung (26) verbunden ist, wobei die Befestigungsvorrichtung (26) zum selektiven Tragen eines Endes eines zweiten Abschnitts (24), welcher sich gegenüber des Beifahrersitzes des Fahrzeugs erstreckt und/oder einer Stützstrebe (20) angepasst ist, welche wiederum zum Verbinden des Querträgers (4) mit dem Fahrzeugboden (16) gemäß der Konfiguration des Fahrzeugs angepasst ist, wobei der zweite Abschnitt (24) Aufnahmeöffnungen umfasst und die Stützstrebe Aufnahmeöffnungen umfasst, **dadurch gekennzeichnet,**
**dass** die Befestigungsvorrichtung Befestigungsmittel (36) und/oder Zentrierungsmittel (38) umfasst, welche so gewählt sind, dass sie mit den zu dem zweiten Abschnitt gehörenden Aufnahmeöffnungen (46, 48) und mit den zu dem oberen Ende (32) der Stützstrebe gehörenden Aufnahmeöffnungen in einer ersten Konfiguration des Fahrzeugs, mit den zu dem oberen Ende der Stützstrebe gehörenden Aufnahmeöffnungen in einer zweiten Konfiguration des Fahrzeugs und mit den zu dem zweiten Abschnitt gehörenden Aufnahmeöffnungen in einer dritten Konfiguration des Fahrzeugs zusammenwirken.

2. Querträger gemäß dem Anspruch 1, **dadurch gekennzeichnet, dass** eines der Enden des zweiten Abschnitts (24) so gewählt ist, dass es an einem Vorderfuß (30) des Fahrzeugs befestigt ist.

3. Querträger gemäß dem Anspruch 1 oder 2, **dadurch gekennzeichnet, dass** die Befestigungsvorrichtung (26) eine erste Platte (34) umfasst, welche sich im Wesentlichen senkrecht zur Querrichtung (Y) des Fahrzeugs erstreckt und welche an dem Ende des ersten Abschnitts (22) befestigt ist, das dem Vorderfuß (28) gegenüberliegt.

4. Querträger gemäß dem Anspruch 3, **dadurch gekennzeichnet, dass** die Befestigungsvorrichtung (26) eine zweite Platte (44) umfasst, welche sich im Wesentlichen senkrecht zur Querrichtung (Y) des Fahrzeugs erstreckt und welche an dem Ende des zweiten Abschnitts (24) befestigt ist, das gegenüber dem ersten Abschnitt (22) angeordnet ist.

5. Querträger gemäß der Ansprüche 3 und 4, **dadurch gekennzeichnet, dass** die erste Platte (34) die Befestigungsmittel (36) und/oder die Zentrierungsmittel (38) umfasst, wobei die zweite Platte (44) die Aufnahmeöffnungen der Mittel umfasst.

6. Querträger gemäß dem Anspruch 5, **dadurch gekennzeichnet, dass** die Befestigungsmittel (36) durch mindestens eine Gewindeachse gebildet werden, welche so gewählt ist, dass sie mit einer Mutter (58) zusammenwirkt.

7. Querträger gemäß dem Anspruch 6, **dadurch gekennzeichnet, dass** die Achse der Befestigungsmittel (36) im Wesentlichen parallel zu der Achse des ersten Abschnitts (22) und/oder des zweiten Abschnitts (24) ist.

8. Querträger gemäß einem der Ansprüche 1 bis 7, **dadurch gekennzeichnet, dass** mindestens eines des ersten und zweiten Abschnitts (22, 24) und der Stützstrebe (20) aus Magnesium oder aus Aluminium oder aus Verbundwerkstoffen besteht.

9. Serie von Fahrzeugen, **dadurch gekennzeichnet, dass** jedes der Fahrzeuge der Serie einen Instrumententafelquerträger gemäß einem der Ansprüche 1 bis 8 mit dem gleichen ersten Abschnitt (22) aufweist.

10. Serie von Fahrzeugen gemäß dem Anspruch 9, in welcher mindestens ein Fahrzeug nur einen ersten Abschnitt (22) und einen zweiten Abschnitt (24) aufweist.

11. Serie von Fahrzeugen gemäß dem Anspruch 9, in welcher mindestens ein Fahrzeug nur einen ersten Abschnitt (22) und eine Stützstrebe (20) aufweist.

## Claims

1. An instrument panel crossmember for vehicles that have different configurations, said crossmember (4) being intended to extend between two front pillars (28, 30) of a vehicle, the crossmember (4) comprising a first portion (22) extending opposite the vehicle driving seat, one end of said first portion (22) being intended to be connected to a front pillar (28) of the vehicle, the other end being connected to a fixing device (26), said fixing device (26) being designed selectively to support one end of a second portion (24) extending facing the vehicle passenger seat and/or a strut (20) designed to connect the crossmember (4) to the floor (16) of the vehicle, depending on the configuration of the vehicle, the second portion (24) comprising receiving orifices, the strut comprising receiving orifices, **characterized in that** the fixing device comprises fixing (36) and/or centering (38) means designed to cooperate with the receiving orifices (46, 48) belonging to the second portion and with the receiving orifices belonging to the upper end (32) of the strut in a first configuration of the vehicle, with the receiving orifices belonging to the upper end of the strut in a second configuration of the vehicle and with the receiving orifices belonging to the second portion in a third configuration of the vehicle.

2. The crossmember according to claim 1, **characterized in that** one of the ends of the second portion (24) is designed to be fixed to a front pillar (30) of the vehicle.

3. The crossmember according to claim 1 or 2, **characterized in that** the fixing device (26) comprises a first platen (34) extending substantially perpendicular to the transverse direction (Y) of the vehicle and fixed to the end of the first portion (22) opposite the front pillar (28).

4. The crossmember according to claim 3, **characterized in that** the fixing device (26) comprises a second platen (44) extending substantially perpendicular to the transverse direction (Y) of the vehicle and fixed to the end of the second portion (22) positioned across from the first portion (22).

5. The crossmember according to claims 3 and 4, **characterized in that** the first platen (34) comprises fixing means (36) and/or centering means (38), the second platen (44) comprising the receiving orifices for said means.

6. The crossmember according to claim 5, **characterized in that** the fixing means (36) are formed by at least one threaded axle intended to cooperate with a nut (58).

7. The crossmember according to claim 6, **characterized in that** the axle of the fixing means (36) is substantially parallel to the axis of the first portion (22) and/or the second portion (34).

8. The crossmember according to any one of claims 1 to 7, **characterized in that** at least one of the first and second portions (22, 24) and the strut (20) is made from magnesium, or aluminum, or composite materials.

9. A line of vehicles, **characterized in that** each of the vehicles in the line includes an instrument panel crossmember according to any one of claims 1 to 8 having the same first segment (22).

10. The line of vehicles according to claim 9, wherein at least one vehicle in the line includes only a first portion (22) and a second portion (24).

11. The line of vehicles according to claim 9, wherein at least one vehicle in the line includes only a first portion (22) and a strut (20).
